# EUROPÄISCHE PATENTSCHRIFT

(11) **EP 2 954 125 B1**
(45) Veröffentlichungstag und Bekanntmachung des Hinweises auf die Patenterteilung: **07.06.2023**
(21) Anmeldenummer: 14711440.9
(22) Anmeldetag: 10.02.2014
(51) Int. Cl.: E04B 1/61, E04B 1/10, E04B 1/26, F16B 12/04

(54) **TRAGKONSTRUKTION AUS HOLZ MIT EINEM STAB- ODER FLÄCHENFÖRMIGEN TRAGELEMENT UND MINDESTENS EINEM ZWEITEN STAB- ODER FLÄCHENFÖRMIGEN TRAGELEMENT**
WOODEN SUPPORT CONSTRUCTION COMPRISING A STRUT-TYPE OR PLANAR SUPPORT ELEMENT AND AT LEAST ONE SECOND STRUT-TYPE OR PLANAR SUPPORT ELEMENT
CONSTRUCTION PORTEUSE EN BOIS COMPORTANT UN ÉLÉMENT PORTEUR EN FORME DE BARRE OU PLAT ET AU MOINS UN DEUXIÈME ÉLÉMENT PORTEUR EN FORME DE BARRE OU PLAT

(30) Priorität: 08.02.2013 DE 102013002104
(43) Veröffentlichungstag der Anmeldung: 16.12.2015
(73) Patentinhaber: Hochschule Trier - Trier University of Applied Sciences, 54293 Trier (DE)
(72) Erfinder: BECKER, Wieland, 54311 Trierweiler (DE); WEBER, Jan, 54205 Trier (DE)
(74) Vertreter: Patentanwälte Dr. Keller, Schwertfeger Partnerschaft mbB
(86) Internationale Anmeldenummer: PCT/EP2014/000352
(87) Internationale Veröffentlichungsnummer: WO 2014/121948

(56) Entgegenhaltungen:
- EP-A1- 0 008 713
- EP-A1- 0 620 332
- EP-A2- 0 651 101
- DE-A1-102009 022 828
- DE-U1-202006 014 381
- FR-A1- 2 768 449

## Beschreibung

### Technisches Gebiet:

Die Erfindung betrifft eine Tragkonstruktion aus Holz mit einem ersten stab- oder flächenförmigen Tragelement und mindestens einem zweiten stab- oder flächenförmigen Tragelement, die unter Bildung eines Stoßes miteinander verbunden und von Verbindungsmitteln zusammengehalten sind, gemäß dem Oberbegriff des Patentanspruchs 1. Eine solche Tragkonstruktion ist beispielsweise aus der DE 10 2009 022 828 A1 bekannt.

### Stand der Technik:

Aus derartigen Tragelementen zusammengesetzte Tragkonstruktionen aus Holz sind vor allem als statisch tragende Strukturen für Gebäude, Hallen, Dächer und dergleichen bekannt, aber auch als lastabtragende Bauelemente wie zum Beispiel Fachwerkträger, Masten etc. Sie dienen sowohl zur Herstellung flächiger als auch dreidimensionaler Tragwerke.

Die zunehmend anspruchsvolle Formensprache der Architektur, sowie neue Herausforderungen im mehrgeschossigen Holzbau erfordern neue Fügetechniken, welche mit bisherigen Holzverbindungsmitteln nur schwer lösbar sind. Zum einen deshalb, weil die 3 D-Geometrien oft nicht mehr nach orthogonalen Mustern aufgebaut sind, zum anderen weil der Wunsch nach schlanken Querschnitten bei Platten und Stäben von Seiten der Architektur groß ist. Ebenso müssen große Kräfte übertragen werden, welchen reine Holzbauteile aufgrund anisotroper Materialeigenschaften nicht genügen.

Bedingt durch die Anisotropie und Imperfektionen des Baustoffes Holz und durch den Wunsch, das Lastabtragungspotenzial bekannter Tragelemente bestmöglich zu nutzen, werden bekannte Tragelemente innerhalb der Gesamtkonstruktion vorzugsweise so eingesetzt, dass ein Lastangriff parallel zur Faser stattfindet, die Tragelemente also in ihrer Längsachse oder ihrer Ebene auf Zug oder Druck beansprucht werden. Diese Art der Konstruktion führt zu Lastkonzentrationen im Stoßbereich zweier oder mehrerer Tragelemente, da dort die Kräfte zusammenlaufen. Um im Stoßbereich einen sicheren Anschluss der Tragelemente zu gewährleisten, ist es bekannt, Knotenbleche mit Anschlussflächen für die einzelnen Tragelemente vorzusehen. Dabei können die Anschlussflächen innerhalb des Holzquerschnitts zu liegen kommen, wozu die Tragelemente im Regelfall geschlitzt sind, oder außerhalb des Holzquerschnitts, wozu schuhförmige Aufnahmen die Tragelemente umgreifen. Die kraftschlüssige Verbindung zwischen Knotenblech und Tragelement erfolgt im Regelfall über quer zur Anschlussfläche verlaufende Dübel.

Als nachteilig erweist sich dabei, dass durch das Schlitzen des Holzquerschnitts und/oder das Anordnen von Querdübeln die zur Lastabtragung zur Verfügung stehende Holzquerschnittsfläche verringert wird, mit der Folge einer verminderten Tragfähigkeit der Tragkonstruktion. Zudem wird die volle Tragfähigkeit derartiger Konstruktionen erst durch Aktivierung der Lochleibungsflächen erreicht. Die dafür notwendigen minimalen Verschiebewege summieren sich zu einem verhältnismäßig großen Schlupf und damit unerwünscht großen Verformungen der Gesamtkonstruktion. Insgesamt wurde bei solchen Konstruktionen festgestellt, dass im Anschlussbereich lediglich 60 % bis 70 % der aus den Tragelementen kommenden Kräfte übertragen werden.

Daneben ist es auch bekannt, Tragelemente aus Holz nach Zimmermannsart mittels Zapfen, Knaggen und dergleichen zu verbinden. Das dieser Verbindungsart zugrunde liegende Prinzip beruht darauf, die Kraftüberleitung durch Herstellung eines Formschlusses zu bewerkstelligen. Der Nachteil liegt jedoch in einer sehr zeitintensiven Herstellung der Formschlussmittel aufgrund deren vorgegebener Geometrie und der eingeschränkten Einsetzbarkeit dieser Verbindungsart aufgrund der abnehmenden Kraftübertragung bei größer werdenden Kraftfaserwinkeln.

Aus der DE 10 2009 022 828 A1 ist zudem eine Knotenpunktausbildung bei einem Fachwerkträger bekannt, bei der Ober- und Untergurt im Anschlussbereich Ausnehmungen aufweisen, in die vertikale oder diagonale Druckstreben und Zugstreben münden. Nach Ausrichten der Streben wird der Hohlraum mit einer erhärtbaren Masse vergossen. Ein erster Nachteil dieser Knotenpunktausbildung zeigt sich bereits bei der Montage, da die Druck- und Zugstreben bis zum Erhärten des Vergusses in der bestimmungsgemäßen Lage durch zusätzliche Maßnahmen fixiert sein müssen. Im Gebrauchszustand erweist sich das lediglich beschränkte Lastabtragungsvermögen als nachteilig, da die einzelnen Streben und Gurte nur über den Druck übertragenden Verguss miteinander verbunden sind, nicht jedoch durch Zugkraft übertragende Verbindungselemente.

### Darstellung der Erfindung:

Vor diesem Hintergrund besteht die Aufgabe der Erfindung darin, eine Tragkonstruktion mit verbessertem Lastabtragungsverhalten zu schaffen. Dabei sollen sowohl höhere Kräfte in den Anschlussbereichen der Tragelemente übertragbar sein, als auch geringere Verformungen unter Last auftreten. Gleichzeitig sollen die Montage erleichtert und die Wirtschaftlichkeit der Tragkonstruktion gesteigert werden.

Diese Aufgabe wird durch eine Tragkonstruktion mit den Merkmalen des Patentanspruchs 1 gelöst.

Vorteilhafte Ausführungsformen ergeben sich aus den Unteransprüchen.

Der Grundgedanke der Erfindung besteht darin die von zusammenlaufenden Tragelementen gebildeten Knoten einer Tragkonstruktion durch einen nachträglichen Verguss zu ertüchtigen. Dazu werden in einem ersten Schritt die Enden der Tragelemente über Verbindungsmittel kraftschlüssig miteinander verbunden. So entsteht zunächst eine weiche und montagefreundliche Konstruktion, die es erlaubt fertigungs- und montagebedingte Toleranzen auszugleichen, mit der aber bereits die Stand- und Traglastsicherheit der Konstruktion für den Bauzustand erreicht wird.

Im Anschluss werden die Knoten zur Erlangung der Gebrauchstauglichkeit mit einer erhärtbaren Masse vergossen, wodurch jeglicher Schlupf im Bereich der Verbindungsmittel aus der Tragkonstruktion eliminiert wird. Da die Knoten nach dem Verguss plötzlich in der Lage sind neben Zug- und Druckkräften auch Schubkräfte und Biegemomente zu übertragen, ändert sich das statische System einer erfindungsgemäßen Tragkonstruktion. Steifigkeit und Leistungsfähigkeit der Konstruktion nehmen zu, während lastbedingte Verformungen gering bleiben. Da der Verguss im inneren der Knoten ausgeführt wird, können Knoten sehr kompakt und optisch ansprechend ausgebildet werden. Der Verguss passt sich der jeweiligen lokal vorhandenen Geometrie an und gleicht dabei Toleranzen ohne zusätzlichen Aufwand aus. Mit der Erfindung ist somit im Hinblick auf das Lastabtragungsverhalten eine sehr leistungsfähige und im Hinblick auf den Material- und Arbeitseinsatz äußerst wirtschaftliche Lösung geschaffen worden.

Die Verbindungsmittel können von einem oder mehreren Stab- oder Seilelementen gebildet sein, also eine ausgeprägte Längserstreckungsrichtung aufweisen, und sich so insbesondere für schlanke stabförmige Tragelemente wie Rund- oder Kanthölzer eignen. Erstrecken sich die Tragelemente auch in der Fläche, so können Flächenelemente als Verbindungsmittel verwendet werden, beispielsweise band-, streifen- oder plattenförmige Verbindungsmittel. Aufgrund der größeren Kontaktfläche mit den Tragelementen zeichnen sich Flächenelemente durch eine höhere Verankerungskraft der Endabschnitte aus. Die Verankerungswirkung kann durch eine Strukturierung der Oberfläche der Verbindungsmittel zusätzlich gesteigert werden, beispielsweise durch die Anordnung von Löchern, Vertiefungen oder Erhöhungen, die die Abstützwirkung in den Schlitzen der Tragelemente verbessern.

Die Verbindungsmittel können sich als einstückiges Teil von einem Tragelement zum anderen Tragelement erstrecken. Aufgrund des geringen Platzbedarfs dieser Ausführungsform können sehr kompakte Knoten gebildet werden, selbst dann, wenn mehrere derartiger Verbindungsmittel parallel nebeneinander in einem Knoten vorgesehen sind.

Gemäß einer anderen Ausführungsform der Erfindung umfassen die Verbindungsmittel ein erstes Teil, das im einen Tragelement verankert ist und ein zweites Teil, das im anderen Tragelement verankert ist. Die Verankerung der Teile in den Tragelementen kann auf diese Weise bereits beim Abbund der Tragelemente im Werk geschehen. Zum Errichten der Tragkonstruktion genügt es dann, die beiden Teile der Verbindungsmittel kraftschlüssig miteinander zu verbinden, beispielsweise durch Schweißen, Verschrauben oder Versplinten, wodurch die Tragkonstruktion die Stand- und Traglastsicherheit erlangt. Auf diese Weise verringert sich der Montageaufwand auf der Baustelle.

Laufen drei oder mehr Tragelemente sternförmig in einem Knoten zusammen, so sieht eine bevorzugte Ausführungsform der Erfindung, dass die Verbindungselemente benachbarte Tragelemente arkadenartig oder bogenförmig verbinden, wobei jeweils zwei Endabschnitte unterschiedlicher Verbindungsmittel gemeinsam im Schlitz eines Tragelements verankert sind. Der Vorteil dieser Ausführungsform liegt darin, dass die Verbindungsmittel durch den arkaden- oder bogenartigen Verlauf keine Kreuzungspunkte bilden und daher im Knotenpunkt nicht kollidieren. Insbesondere flächige Tragkonstruktionen profitieren von dieser Führung der Verbindungsmittel, da die Knoten auf diese Weise sehr gedrungen ausgebildet werden können.

Um bei kreuzenden Flächenelementen als Verbindungsmittel eine möglichst gedrungene Knotenausbildung zu erreichen, sieht eine andere Ausführungsform der Erfindung vor, dass die Flächenelemente in ihrem mittleren Längsabschnitt schmäler sind, als in den Endabschnitten. Vorzugsweise ist zu diesem Zweck eine vom Rand ausgehende Ausnehmung vorgesehen, die sich etwa bis zur halben Höher der Flächenelemente erstreckt. Die kreuzenden Flächenelemente können auf diese Weise mit einander zugewandten Randausnehmungen ineinander gesteckt werden, so dass lediglich die Höhe eines Flächenelements für Höhe des Knoten maßgebend ist.

Als Vergussmasse kommt bevorzugt Mineralguss bzw. Polymerbeton zum Einsatz. Dieser geht nicht nur einen äußerst leistungsfähigen Verbund mit den Verbindungsmitteln ein, sondern ebenso mit den Tragelementen aus Holz. Dadurch beschränkt sich die Vergussmasse nicht nur auf die Lagefixierung der Verbindungsmittel im Stoßbereich, sondern wird selbst zum lastabtragenden Verbindungselement, das Zug-, Druck- und Scherkräfte aufnimmt.

Ein Aspekt im Tragsicherheitskonzept des Bauwesens besteht in der Ausnutzung eines elastischen Verhaltens von Bauteilen im Gebrauchstauglichkeitszustand, um Spannungsspitzen zu verhindern. Durch geeignete Modifikation der Mineralgussrezeptur lassen sich wichtige statische Eigenschaften wie zum Beispiel der Elastizitätsmodul der Vergussmasse einstellen. Über die Mineralgussrezeptur der Vergussmasse sowie die Abmessungen des Aufnahmeraums und damit die Größe des Vergusskörpers lässt sich das elastische Verhalten einer erfindungsgemäßen Tragkonstruktion gezielt steuern. Durch Ausnutzung des Übergangsbereichs vom elastischen zum plastischen Verformungsverhalten der Vergussmasse ist es dank der Erfindung sogar möglich, Fließgelenke innerhalb der Tragkonstruktion zu realisieren.

Eine geeignete Vergussmasse aus Mineralguss bzw. Polymerbeton weist beispielsweise als Füllstoff oder mineralischen Zuschlag Quarz, Basalt, Granit, Diabas oder Kreide, in Kies- und/oder in Sandform und/oder als Mehl, mit einem Gew.-Anteil von 70 % bis 97 % auf, vorzugsweise von 85 % bis 95 %. Als Bindemittel sind PUR-, Epoxid-, Polyester-, Vinylester-, und/oder ein Methacrylharze bevorzugt, vorzugsweise mit einem Gew.-Anteil von 1 % bis 10%, insbesondere von 5 % bis 8 %. Als Härter für das Bindemittel können Isocyanate, Anhydride, Amine und/oder Polyamine Verwendung finden, vorzugsweise mit einem Gew.-Anteil von 0,5 % bis 10 %, vorzugsweise 1 % bis 5 %. Durch optionale Zugabe von Benetzungsmittel wird die Adhäsion zu den Verbindungsmitteln und den Tragelementen gesteigert.

### Kurze Beschreibung der Zeichnungen:

Die Erfindung wird nachstehend anhand mehrerer in den Zeichnungen dargestellter Ausführungsbeispiele näher erläutert, wobei weitere Merkmale und Vorteile der Erfindung offenbar werden. Für gleiche oder funktionsgleiche Merkmale unterschiedlicher Ausführungsbeispiele werden gleichlautende Bezugszeichen verwendet, soweit dies dem besseren Verständnis der Erfindung dient.

Es zeigt
- Fig. 1: eine Schrägansicht auf einen Teilbereich einer erfindungsgemäßen Tragkonstruktion in Form eines Tragrostes,
- Fig. 2: eine Schrägansicht auf einen Knoten der in Fig. 1 dargestellten Tragkonstruktion,
- Fig. 3: den in Fig. 2 dargestellten Knoten, wobei ein Tragelement vom Knoten gelöst ist,
- Fig. 4: eine Draufsicht auf den in Fig. 2 dargestellten Knoten,
- Fig. 5a: eine Schrägansicht einer zweiten Ausführungsform eines erfindungsgemäßen Knotens mit gelenkigem Anschluss der Tragelemente,
- Fig. 5b: eine Schrägansicht auf eine dritte Ausführungsform eines erfindungsgemäßen Knotens mit ebenfalls gelenkigem Anschluss der Tragelemente,
- Fig. 6: eine Schrägansicht auf eine vierteAusführungsform eines erfindungsgemäßen Knotens in Form eines Kreuzstoßes,
- Fig. 7: eine Schrägansicht auf den in Fig. 6 dargestellten Knoten, wobei ein Tragelement vom Knoten gelöst ist,
- Fig. 8: eine Draufsicht auf den in Fig. 6 dargestellten Knoten,
- Fig. 9: einen Schnitt durch den in Fig. 8 dargestellten Knoten entlang der dortigen Linie IX - IX,
- Fig. 10: eine Schrägansicht auf eine fünfte Ausführungsform eines erfindungsgemäßen Knotens in Form eines Kreuzstoßes,
- Fig. 11: eine Schrägansicht auf den in Fig. 10 dargestellten, wobei zwei Tragelement vom Knoten gelöst sind,
- Fig. 12: eine Draufsicht auf den in Fig. 10 dargestellten Knoten,
- Fig. 13: einen Schnitt durch den in Fig. 12 dargestellten Knoten entlang der dortigen Linie XIII - XIII,
- Fig. 14: eine Schrägansicht auf eine sechste Ausführungsform eines erfindungsgemäßen Knotens mit aus allen Raumrichtungen zusammenlaufenden Tragelementen,
- Fig. 15: eine Schrägansicht auf den in Fig. 14 dargestellten Knoten, wobei ein Teil der Tragelemente vom Knoten gelöst ist,
- Fig. 16: einen Vertikalschnitt durch den in Fig. 14 dargestellten Knoten entlang der in Figur 17 dargestellten Linie XVI-XVI,
- Fig. 17: einen Horizontalschnitt durch den in Fig. 16 dargestellten Knotenpunkt entlang der dortigen Linie XVII - XVII,
- Fig. 18: eine Schrägansicht auf eine siebte Ausführungsform der Erfindung mit einer von flächenförmigen Tragelementen gebildeten Tragkonstruktion,
- Fig. 19: einen Schnitt durch eine achte Ausführungsform der Erfindung mit einer von flächenförmigen Tragelementen gebildeten Tragkonstruktion,
- Fig. 20: eine Schrägansicht auf eine neunte Ausführungsform der Erfindung mit einer von flächenförmigen Tragelementen gebildete Tragkonstruktion,
- Fig. 21: einen Schnitt durch die in Fig. 20 gezeigte Ausführungsform,
- Fig. 22: eine Schrägansicht auf eine Ausführungsform eines nicht unter der Gegenstand der vorliegenden Erfindung fallenden Knotens mit biegesteifem Anschluss der Tragelemente, und
- Fig. 23: eine Schrägansicht auf eine zehnte Ausführungsform eines erfindungsgemäßen Knotens mit ebenfalls biegesteifem Anschluss der Tragelemente.

### Wege zur Ausführung der Erfindung und gewerbliche Verwertbarkeit:

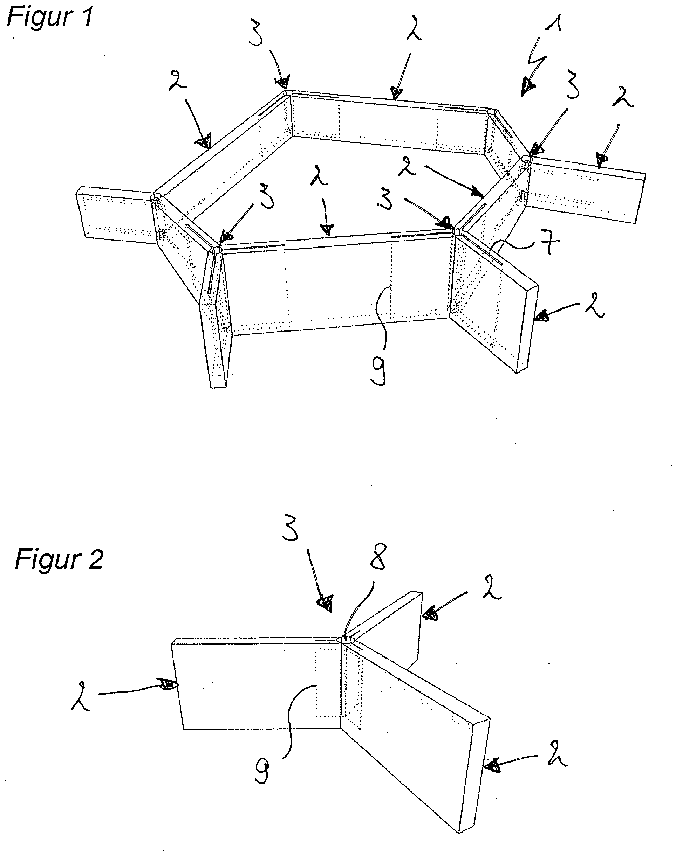

Fig. 1 zeigt beispielhaft die Umsetzung der Erfindung anhand eines zellenartigen Tragrostes 1, der von einer Vielzahl flächenförmiger Tragelemente 2 gebildet ist, die mit ihren Enden in Knoten 3 zusammenlaufen und dort kraftschlüssig miteinander verbunden sind.

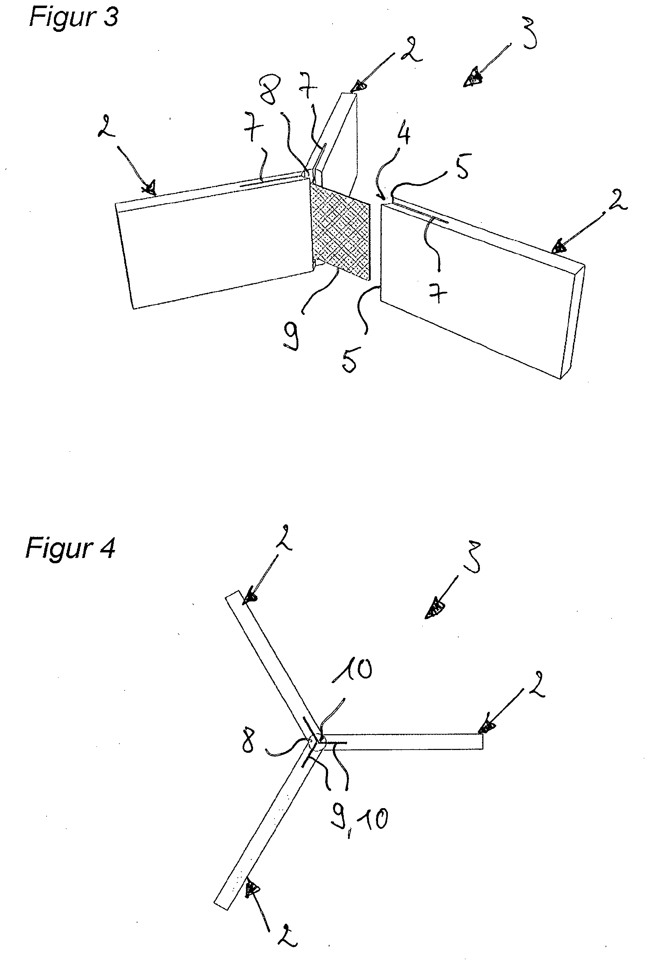

Eine erste Ausführungsform einer erfindungsgemäßen Knotenausbildung ist in den Fig. 2 bis 4 dargestellt. Man sieht die dem Knoten 3 zugewandten Stirnseiten 4 dreier im Umfangsabstand von jeweils 120° angeordneter Tragelemente 2. Die Stirnseiten 4 der Tragelemente 2 sind über ihre gesamte Höhe konkav ausgebildet, wodurch zwei aus der Stirnseite 4 hervorstehende Ränder 5 entstehen, die durch eine dazwischen liegende Vertiefung getrennt sind. In der Mittelebene der Tragelemente 2 sieht man einen von der Stirnseite 4 ausgehenden, sich über eine Teillänge des Tragelements 2 erstreckenden Schlitz 7. Beim Zusammenfügen der einzelnen Tragelemente 2 im Knoten 3 stoßen die Ränder 5 benachbarter Tragelemente 2 dichtend aufeinander und umschließen so einen von den einzelnen Vertiefungen gebildeten Aufnahmeraum 8.

In dieser Position werden die Tragelemente 2 von Flächenelementen 9 als Verbindungsmittel zusammengehalten. Als Verbindungsmittel werden im vorliegenden Ausführungsbeispiel drei Flächenelemente 9, die mittig im geeigneten Winkel, hier um 60°, aufgebogen sind, sternförmig zusammengefügt, wobei jede Hälfte eines Flächenelements 9 mit der Hälfte eines benachbarten Flächenelements 9 aufeinander liegt. Die auf diese Weise sternförmig in Richtung der Tragelemente 2 weisenden, paarweise aufeinanderliegenden Flächenelementhälften werden jeweils in einen Schlitz 7 gesteckt und dort verankert, beispielsweise mittels eines Klebers. Um den Verbund im Verankerungsbereich zu steigern, bestehen die Flächenelemente 9 jeweils aus einem Lochblech, so dass beim Verkleben der Flächenelemente 9 in den Aufnahmeschlitzen 7 Klebstoff in die Löcher eindringt und den Verbund zu den Tragelementen 2 steigert.

Der auf diese Weise hergestellte Knoten 3 ist nach der Verankerung der Flächenelemente 9 bereits tragfähig, besitzt aber noch nicht die für die Gebrauchstauglichkeit erforderliche Steifigkeit. Zu diesem Zweck wird nachträglich der von den Flächenelementen 9 durchsetzte Aufnahmeraum 8 mit einer erhärtbaren Vergussmasse 15 aufgefüllt.

Vorzugsweise besteht der Verguss 15 aus einem Polymerbeton.

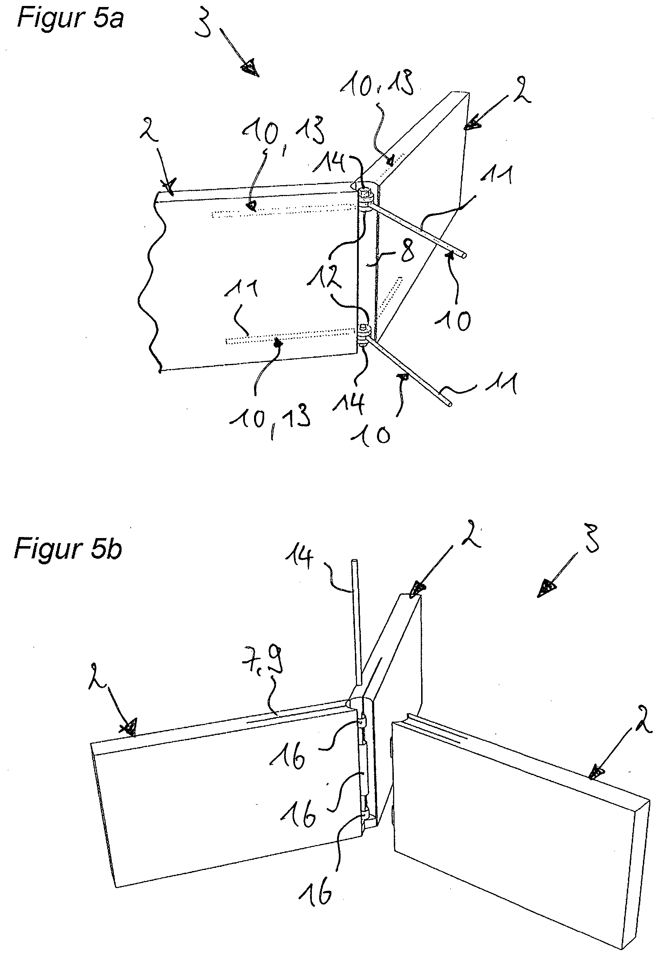

Fig. 5a zeigt eine alternative Ausführungsform zu der unter den Fig. 2 bis 4 beschriebenen, bei der anstelle der Flächenelemente 9 als Verbindungsmittel Stabelemente 10 Verwendung finden. Die Tragelemente 2 gleichen den vorbeschriebenen mit dem Unterschied, dass anstelle eines Schlitzes 7 nunmehr axial gerichtete Aufnahmebohrungen 13 in der Mittelebene der Tragelemente 2 eingebracht sind. Jedes Stabelement 10 besitzt einen zylindrischen Schaft 11, der in die Aufnahmebohrung 13 eingeschoben und darin verankert ist. Der Schaft 11 endet im Bereich der Vertiefung 6 und damit im Aufnahmeraum 8 mit einem ringförmig ausgebildeten Kopf 12.

Im vorliegenden Ausführungsbeispiel sind zwei Stabelemente 10 in unterschiedlicher Höhe entlang der Stirnseiten 4 eines jeden Tragelements 2 vorgesehen, die mit den Stabelementen 10 der gegenüberliegenden Tragelemente 2 ein Gelenk ausbilden. Zu diesem Zweck liegen die ringförmigen Köpfe 12 der Stabelemente 10 mit fluchtenden Ringöffnungen übereinander und sind jeweils über einen Gelenkbolzen 14 miteinander verbunden. Bei der Herstellung der Stand- und Traglastsicherheit sind somit aufgrund der Gelenke moderate Bewegungen zum Ausgleichen von Bauteil- und Montagetoleranzen möglich. Durch das Auffüllen des Aufnahmeraums 8 mit einer erhärtbaren Vergussmasse 15 wird die für die Gebrauchstauglichkeit des Knotens 3 erforderliche Steifigkeit hergestellt.

Fig. 5b stellt eine Kombination der beiden zuvor beschriebenen Ausführungsformen dar, bei der Flächenelemente 9 in Schlitzen 7 der Tragelemente 2 verankert sind und mit ihrem Überstand Aufnahmen 16 für einen durchgehenden Gelenkbolzen 14 bilden. Die Aufnahmen 16 der unterschiedlichen Tragelemente 2 sind dabei über die Höhe der Stirnseite 4 mit einem Versatz zueinander angeordnet, so dass ein in der Höhe bündiges Zusammenfügen der Tragelemente 2 möglich ist. Auch hier wird nach Herstellen der Stand- und Traglastsicherheit im Zuge des Einschiebens des Gelenkbolzens 14 der sich ergebende Aufnahmeraum 8 mit einer erhärtbaren Vergussmasse 15 verfüllt, um die Gebrauchstauglichkeit der Tragkonstruktion zu erlangen.

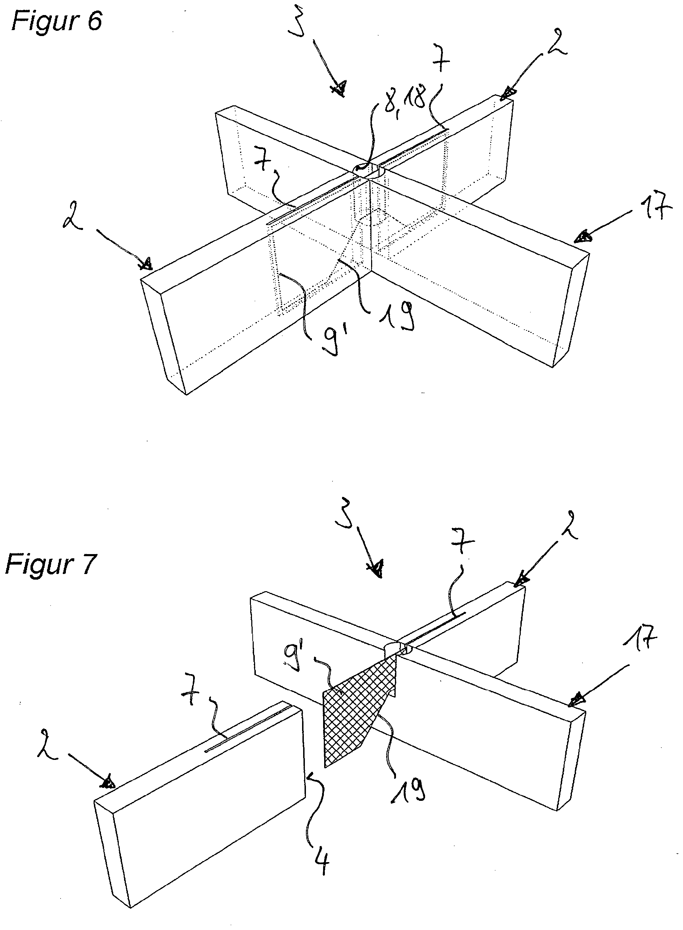

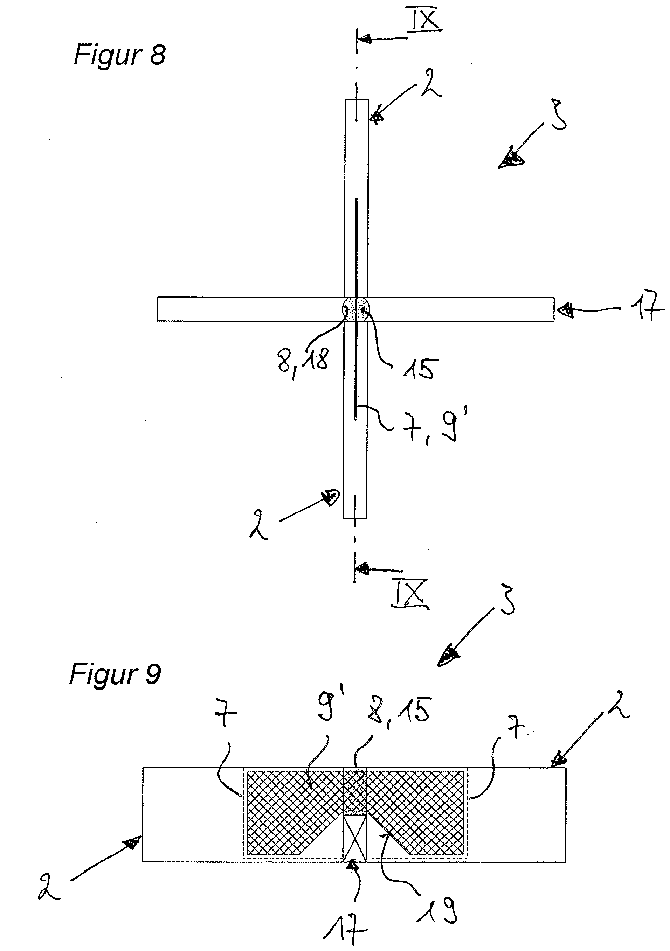

Die Besonderheit der in den Fig. 6 bis 9 dargestellten Ausführungsform der Erfindung liegt in der Ausbildung eines Kreuzstoßes mit zwei sich gegenüberliegenden Tragelemente 2 in Kombination mit einem den Knoten 3 durchlaufenden Tragelement 17. Die Tragelemente 2 entsprechen den unter den Fig. 2 bis 4 beschriebenen und können an irrer Stirnseite 4 eine Vertiefung 6 aufweisen oder - wie im vorliegenden Ausführungsbeispiel - plan ausgebildet sein.

Die Tragelemente 17 besitzen im Bereich des Knotens 3 eine sich vom oberen Längsrand bis etwa zur halben Höhe des Tragelements 17 reichende Randausnehmung 18, die sich über die gesamte Dicke des Tragelements 17 erstreckt und auf diese Weise seitliche Durchbrüche erzeugt. Der umfangsseitig geschlossene Aufnahmeraum 8 wird im Zuge des Zusammenfügens der Tragelemente 2 und 17 gebildet, indem die Stirnseiten 4 der Tragelemente 2 die seitlichen Durchbrüche schließen. Dabei mündet der Schlitz 7 des einen Tragelements 2 in den Aufnahmeraum 8 und fluchtet mit dem Schlitz 7 des gegenüberliegenden Tragelements 2.

Als Verbindungsmittel dient ein Flächenelement 9', das sich in Form eines Lochblechs vom einen Tragelement 2 zum gegenüberliegenden erstreckt und dabei im Bereich des Aufnahmeraums 8 das Tragelement 17 überbrückt. Um eine möglichst große Fläche zur Verankerung des Flächenelements 9 in den Schlitzen 7 zur Verfügung zu stellen, weisen die Flächenelemente 9' in den von Schlitzen 7 aufgenommenen Endabschnitten eine größere Höhe auf als im dem den Aufnahmeraum 8 kreuzenden Mittelabschnitt. Dies wird erreicht, indem die Flächenelemente 9' eine vom unteren Rand ausgehende trapezförmige Ausnehmung 19 aufweisen.

Auch bei dieser Ausführungsform wird die Stand- und Traglastsicherheit durch die Verankerung des Flächenelements 9' in den Schlitzen 7 erreicht. Die Gebrauchstauglichkeit wird nach Einbringen und Erhärten der Vergussmasse 15 im Aufnahmeraum 8 erlangt.

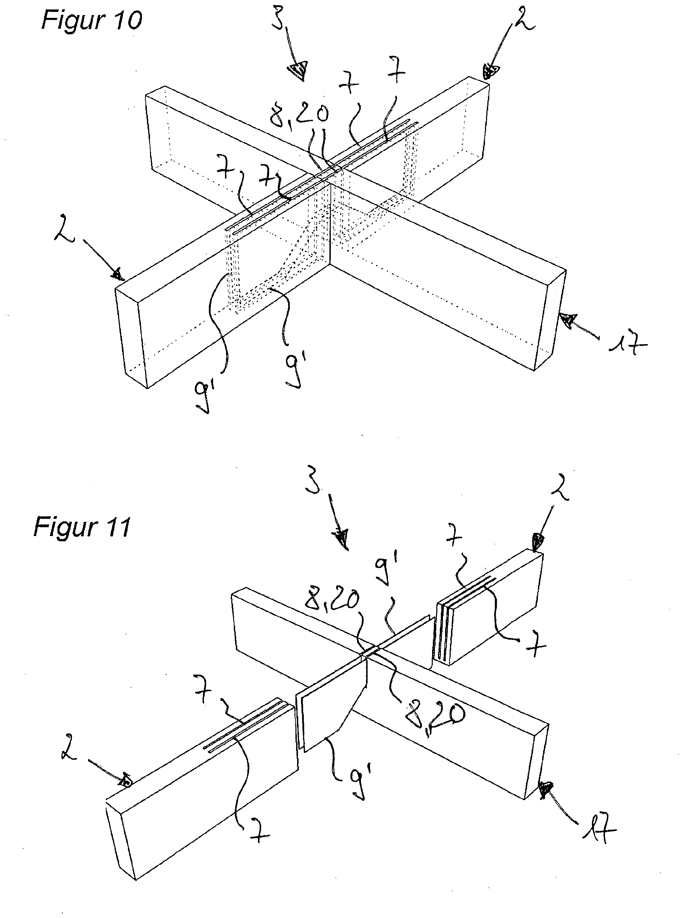

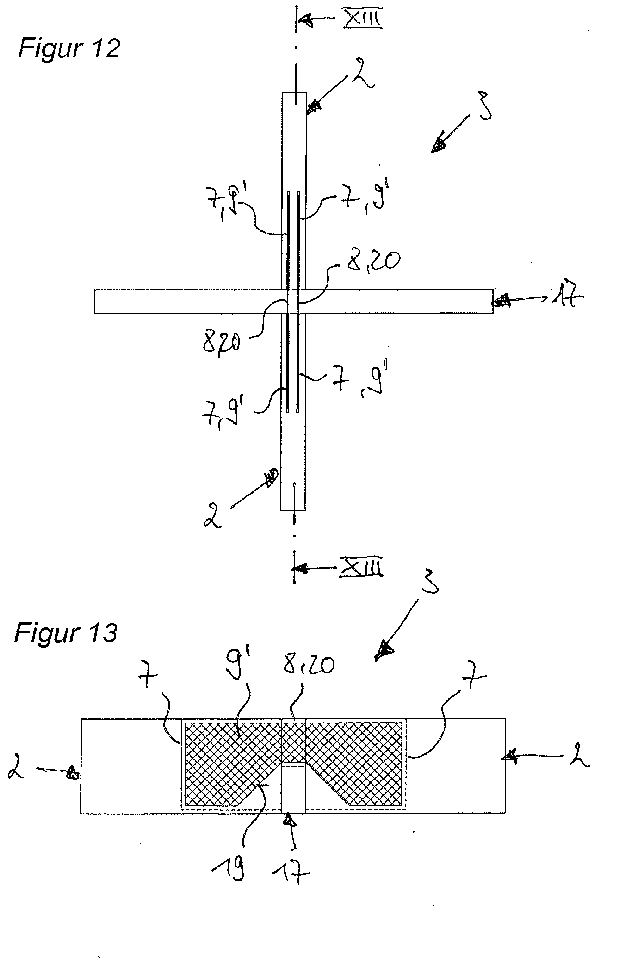

Von der zuvor beschriebenen Ausführungsform unterscheidet sich die Ausführungsform gemäß der Fig. 10 bis 13 im Wesentlichen durch die Anordnung eines zweiten Flächenelements 9' als Verbindungsmittel, das in deckungsgleicher und planparalleler Lage zum ersten Flächenelement 9' in den Enden der sich gegenüberliegenden Tragelemente 2 verankert ist. Zu diesem Zweck besitzen die Tragelemente 2 einen zusätzlichen planparallelen Schlitz 7.

Ein weiterer Unterschied ergibt sich aus dem reduzierten Aufnahmeraum 8 dieser Ausführungsform, der auf die mit den Schlitzen 7 fluchtenden Randeinschnitte 20 im Tragelement 17 beschränkt ist.

Auch hier ergibt sich die Gebrauchstauglichkeit der Tragkonstruktion nach der Verankerung der Flächenelemente 9' in den Schlitzen 7 und Verguss der Randeinschnitte 20.

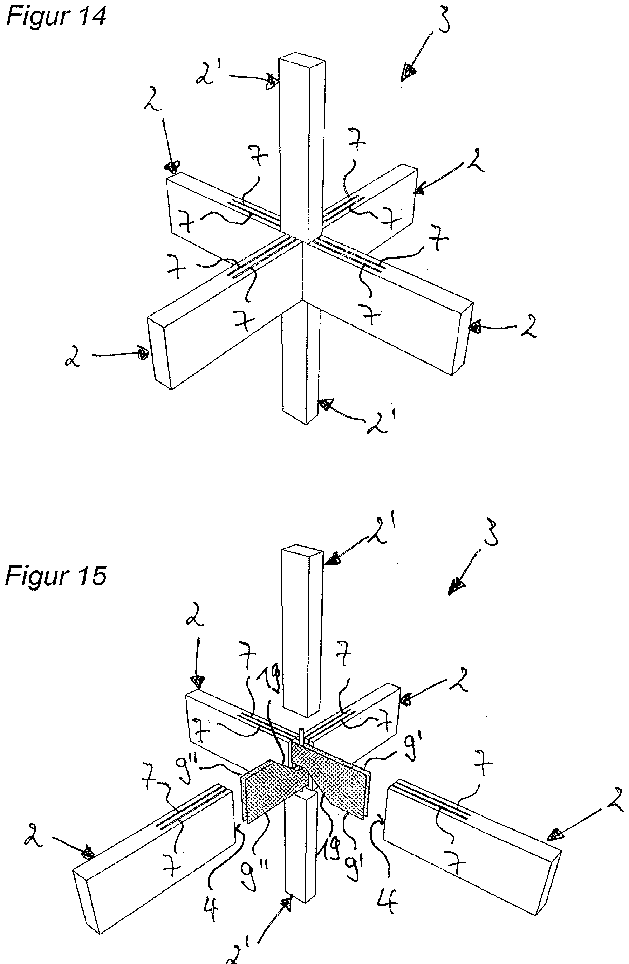

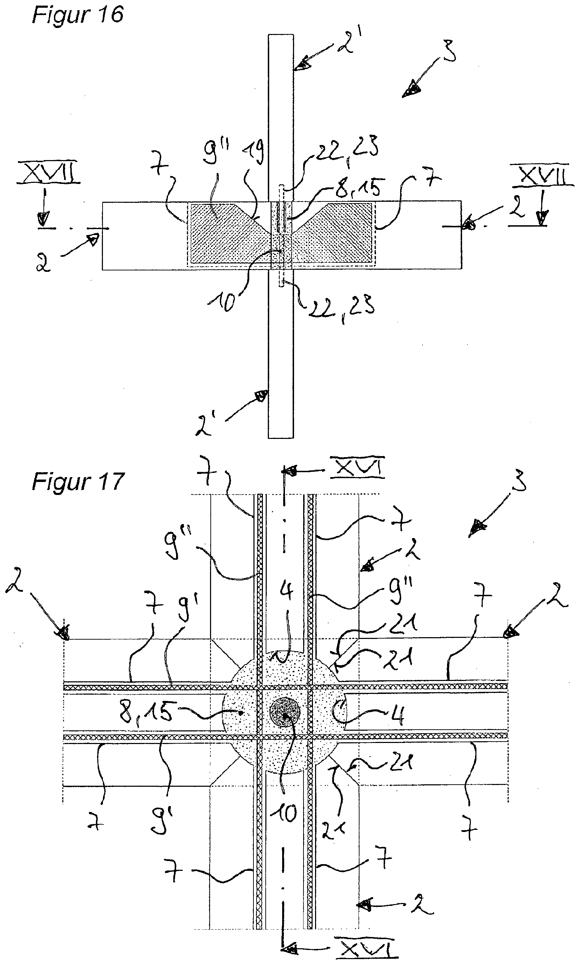

Gegenstand der Fig. 14, 15, 16 und 17 ist ein Knoten 3, der von horizontal verlaufenden, stabförmigen Tragelementen 2 und vertikal verlaufenden stabförmigen Tragelementen 2' gebildet ist, deren Längsachsen sich im Knoten 3 schneiden. Die Enden der vier sich paarweise gegenüberliegenden Tragelemente 2 sind wiederum mit planparallelen Schlitzen 7 versehen und dienen jeweils zur Aufnahme von Flächenelementen 9', 9", wie sie bereits unter den Fig. 10 bis 13 beschrieben sind. Die Randausnehmung 19 in den Flächenelementen 9', 9" ermöglicht die paarweise Kreuzung der Flächenelemente 9', 9", indem die sich kreuzenden Flächenelementpaare 9', 9" in umgekehrter Lage zueinander angeordnet sind, d. h. die Randausnehmungen 19 des einen Flächenelementpaares 9' weisen nach unten und die Randausnehmungen 19 des anderen Flächenelementpaares 9" nach oben. Auf diese Weise können sich die Flächenelementpaare 9', 9" mit den Randausnehmungen 19 ineinandergreifend überkreuzen, ohne dadurch einen Höhenversatz zu bedingen.

Die Stirnseiten 4 der Tragelemente 2 liegen sich in lichtem Abstand paarweise gegenüber, wobei die Querränder 5 einander berühren. Zur Erleichterung der Montage können die Querränder 5 eine Fase 21 aufweisen, die die Kontaktfläche zwischen den Tragelementen 2 bildet.

Der Anschluss der vertikalen Tragelemente 2' erfolgt über ein Stabelement 10, das den Aufnahmeraum 8 in dessen Längsachse durchsetzt und nach oben und unten einen Überstand 22 ausbilden. Mit den Überständen 22 ist das Stabelement 10 sowohl im unteren als auch oberen Tragelement 2' jeweils in einer axialen Bohrungen 23 kraftschlüssig verankert.

Zur Erlangung der Gebrauchstauglichkeit des Knotens 3 wird der Aufnahmeraum 8 mit einer erhärtbaren Vergussmasse 15, beispielsweise Polymerbeton, verfüllt, wodurch jeglicher Schlupf im Bereich des Knotens 3 eliminiert wird.

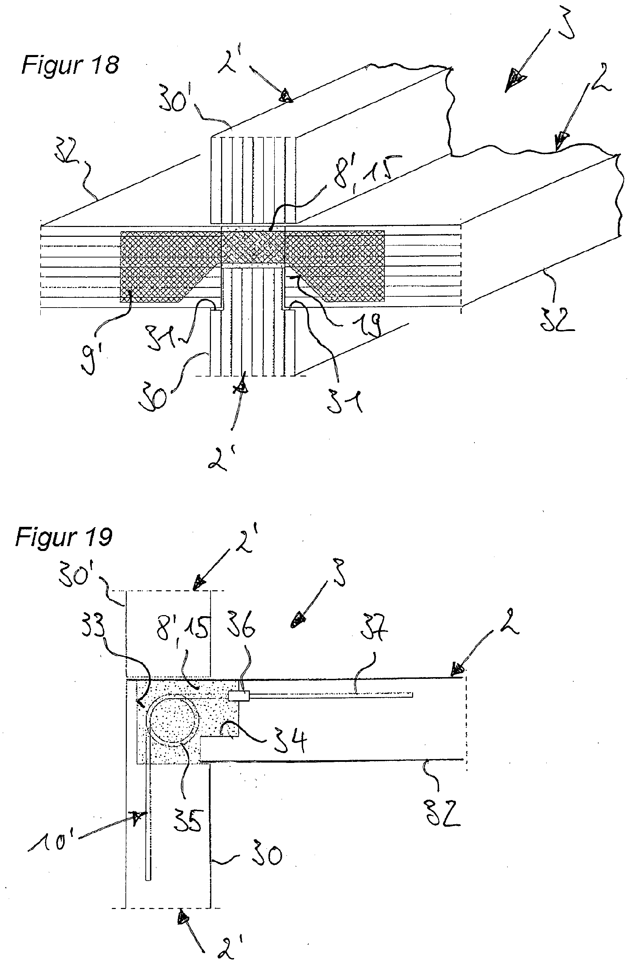

Die Fig. 18 bis 21 betreffen Ausführungsformen der Erfindung, bei denen flächenförmige Tragelemente 2 linear aneinander angeschlossen sind. Fig. 18 zeigt das obere Ende eines flächenförmigen Tragelements 2' in Form einer Raumwand 30, das zur Bildung von Lagerkonsolen 31 beidseitig einen Rücksprung aufweist. Die Lagerkonsolen 31 dienen der Aufnahme des Randbereichs horizontal verlaufender flächenförmiger Tragelemente 2 in Form von Holzdeckenelementen 32, deren Oberkante jeweils über das stirnseitige Ende der Raumwand 30 übersteht. Auf diese Weise wird ein streifenförmiger Aufnahmeraum 8' gebildet.

Die Randbereiche der Holzdeckenelemente 32 sind in vorbestimmten Abständen geschlitzt, wobei Schlitze der sich gegenüberliegenden Deckenelemente 32 fluchten. So ist es möglich, dass in die Schlitze Flächenelemente 9', wie sie unter den Fig. 6 bis 8 näher beschrieben sind, eingesteckt und dort verankert sind. Die Randausnehmung 19 im Flächenelement 9' dient dabei der Überbrückung der Raumwand 30. Dabei erstreckt sich das Flächenelement 9' mit seinem mittleren schmaleren Abschnitt durch den sich oberhalb des Wandelements 30 anschießenden Aufnahmeraum 8'.

Zur Erlangung der Gebrauchstauglichkeit wird der Aufnahmeraum 8' mit einer erhärtbaren Vergussmasse 15 aufgefüllt. Anschließend kann die nach oben anschließende Raumwand 30' aufgestellt werden.

Fig. 19 zeigt eine Ausführungsform der Erfindung, bei der ein Holzdeckenelement 32 einseitig an ein Holzwandelement 30 angeschlossen ist. Dazu weist die Stirnseite des Holzwandelements 30 auf der dem Holzdeckenelement 32 zugewandten Seite eine linear über die Wandlänge verlaufende Ausnehmung 33 auf, deren Höhe bis zur Oberkante des Holzdeckenelements 32 reicht. Im Zuge der Auflagerung des Holzdeckenelements 32 im Randbereich der Ausnehmung 33, bilden die Stirnseite des Holzdeckenelements 32 mit dem Holzwandelement 30 einen linear verlaufenden Aufnahmeraum 8', der sich aufgrund eines Rücksprungs 34 in der Stirnseite des Holzdeckenelements 32 stufenförmig nach oben weitet.

Die das Holzwandelement 30 und Holzdeckenelement 32 verbindenden Mittel bestehen aus Stabelementen 10', deren Endabschnitte im rechten Winkel zueinander verlaufen und im Umlenkbereich in eine über 450° umlaufende Wendelwindung 35 übergehen. Der vertikale Endabschnitt des Stabelements 10' ist dabei in einer entsprechenden Bohrung im Holzwandelement 30 verankert. Der horizontale Endabschnitt des Stabelements 10' ist über einen Muffenstoß 36 an ein werkseitig in einer Bohrung im Holzdeckenelement 32 verankerter Stab 37 angeschlossen. Der Aufnahmeraum 8' ist wiederum von einer Vergussmasse 15 verfüllt, die dabei das Stabelement 10' vollständig umhüllt. Nach oben schließt sich ein weiteres Holzwandelement 30' an.

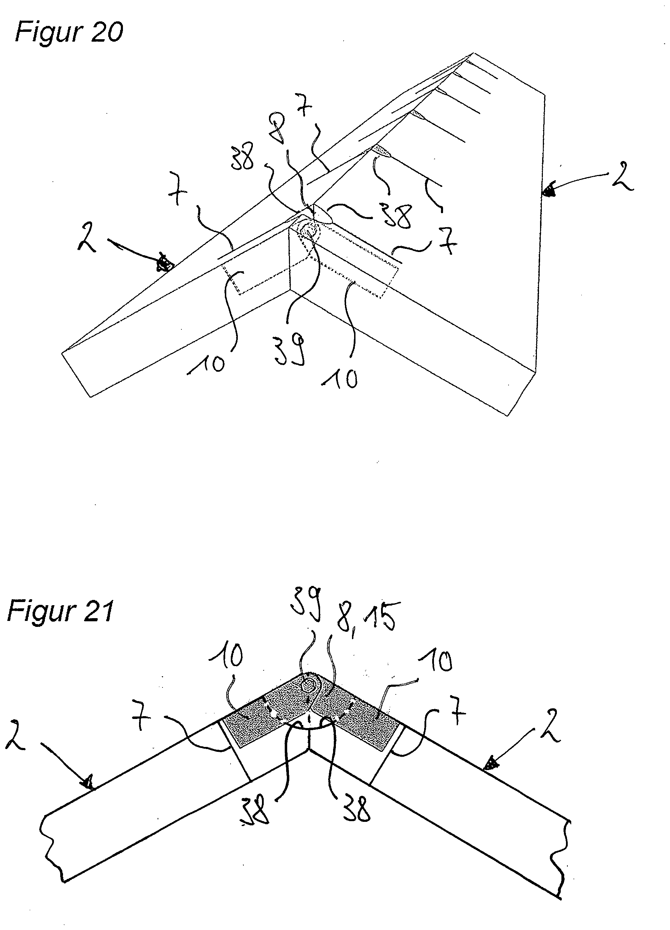

Die Fig. 20 und 21 offenbaren eine Ausführungsform der Erfindung mit zwei flächenförmigen Tragelementen 2, die entlang ihrer gemeinsamen Kontaktfuge miteinander verbunden sind, beispielsweise zur Herstellung eines Plattenfaltwerks. Im Bereich der gegenseitig anzuschließenden Ränder der Tragelemente 2 sind in vorbestimmten Abständen Randausnehmungen 38 angebracht, die zur Unterseite der Tragelemente 2 geschlossen sind und auf diese Weise zusammen mit den Ausnehmungen 38 eines gegenüberliegenden Tragelements 2 einen gemeinsamen Aufnahmeraum 8 bilden. Mittig von den Ausnehmungen 38 erstreckt sich jeweils ein senkrecht zum Rand verlaufender Schlitz 7, der zur Aufnahme laschenförmiger Stabelemente 10 als Verbindungsmittel dient. Die laschenförmigen Stabelemente 10 reichen bis in die Ausnehmung 38 und weisen am dortigen Ende eine Querbohrung auf. Zur Bildung eines Scharniergelenks wirken zwei sich im Aufnahmeraum 8 gegenüberliegende Stabelemente 10 zusammen, indem durch die fluchtend zueinander angeordneten Querbohrungen eine Schraube 39 als Scharnierachse gesteckt ist, die die beiden Stabelemente 10 kraftschlüssig verbindet. In diesem Zustand ist bereits die Stand- und Traglastsicherheit gegeben. Die Gebrauchstauglichkeit der Tragkonstruktion stellt sich mit Einbringen der Vergussmasse 15 in den Aufnahmeraum 8 ein. Die Erfindung ist nicht auf die Merkmalskombinationen der einzelnen Ausführungsformen beschränkt, sondern umfasst ebenso Kombinationen von Merkmalen unterschiedlicher Ausführungsformen, soweit sich diese dem Fachmann ohne weiteres erschließen.

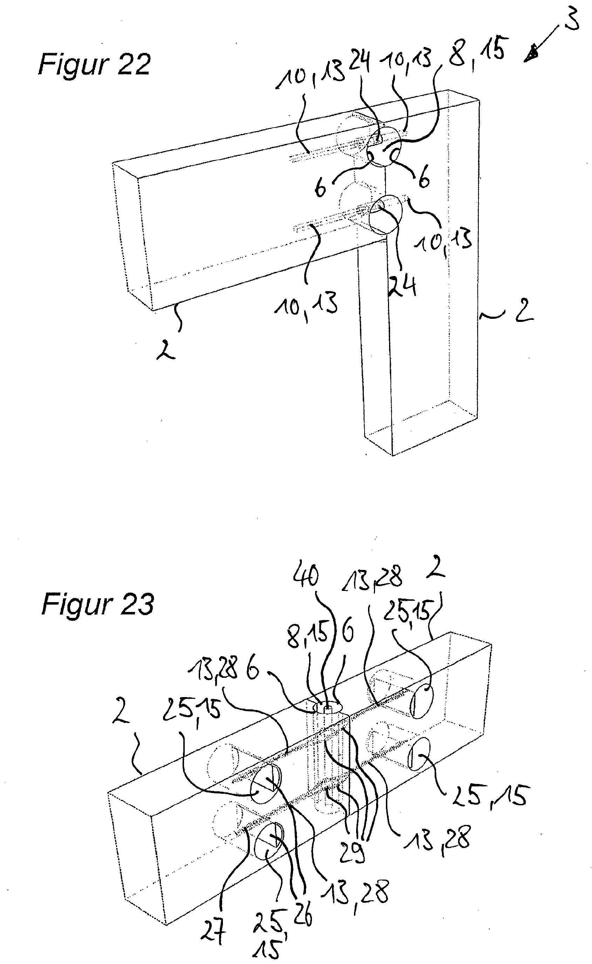

In Fig. 22 ist eine nicht unter den Gegenstand der vorliegenden Erfindung fallende Rahmenecke dargestellt, deren horizontales Tragelement 2 und vertikales Tragelement 2 in dem Knoten 3 biegesteif miteinander verbunden sind. Dazu sind in der gemeinsamen Kontaktfläche zwei achsparallele, im Abstand übereinander liegende zylindrische Aufnahmeräume 8 vorgesehen, die jeweils von quer zu den Traggliedern 2 verlaufenden, sich gegenüberliegenden Vertiefungen 6 gebildet sind. Auf Höhe der Vertiefungen 6 ist jeweils eine senkrecht zur Kontaktfläche verlaufende Aufnahmebohrung 13 in die Tragelemente 2 eingebracht, in die jeweils ein stabförmiges Verbindungselement 10 eingeklebt oder eingeschraubt ist. Jedes Verbindungselement 10 endet mit seinem freien Ende in einer Vertiefung 6, so dass sich jeweils zwei Verbindungselemente 10 in einem Aufnahmeraum 8 fluchtend gegenüberliegen.

Die kraftschlüssige Verbindung einander paarweise zugeordneten Verbindungselemente 10 geschieht jeweils über eine Schraubmuffe 24, die auf beide Enden der Verbindungselemente 10 aufgeschraubt ist. Der Aufnahmeraum 8 ist mit einer Vergussmasse 15 aus Mineralguss bzw. Polymerbeton ausgefüllt und überträgt in der Kontaktfuge Druck- und Zugkräfte sowie Querkräfte.

Fig. 23 zeigt schließlich einen stumpfen Stoß zweier fluchtender Tragelemente 2 in biegesteifer Ausbildung. Dazu sind wiederum in den den Stoß bildenden Stirnseiten sich gegenüberliegende Vertiefungen 6 vorgesehen, die zusammen einen sich über die gesamte Höhe der Tragelemente 2 erstreckenden zylindrischen Aufnahmeraum 8 bilden. In den Aufnahmeraum 8 münden paarweise auf einer Höhe liegende Aufnahmebohrungen 13, die in Längsrichtung der Tragelemente 2 verlaufen und jeweils in einer sich quer zum Tragglied 2 erstreckenden Vergusstasche 25 enden.

In den Aufnahmebohrungen 13 ist jeweils eine Seilschlaufe 28 angeordnet, deren vorderes Ende von einer Öse 29 gebildet ist, die mit der Öse 29 einer axial gegenüberliegenden Seilschlaufe 28 überlappt. Das rückwärtige Ende einer Seilschlaufe 28 endet hingegen in der Vergusstasche 25, wo es mit Hilfe eines druckverteilenden Verankerungskörpers 26 und einer aufgeschraubten Mutter 27 fixiert ist. Ein die Ösen 29 paarweise durchdringender Splintbolzen 40 verbindet die Seilschlaufen 28 im Aufnahmeraum 8. Durch Anziehen der Muttern 27 ist eine Spannkraft auf die Seilschlaufen 28 aufbringbar, die die Tragglieder 2 axial zusammenspannt und so den biegesteifen Anschluss bewirkt. Sowohl der Aufnahmeraum 8 als auch die Vergusstaschen 25 sind mit einer Vergussmasse 15 verfüllt, die vorzugsweise von Mineralguss bzw. Polymerbeton gebildet ist.

## Patentansprüche

1. Tragkonstruktion aus Holz mit einem ersten stab- oder flächenförmigen Tragelement (2) und mindestens einem zweiten stab- oder flächenförmigen Tragelement (2, 2'), die auf Stoß angeordnet sind und mit Hilfe von Verbindungsmitteln (9, 9', 10) zusammengehalten sind, wobei
- die Verbindungsmittel (9, 9', 10) einen ersten Endabschnitt, der im ersten Tragelement (2) verankert ist, und einen zweiten Endabschnitt, der in einem zweiten Tragelement (2, 2') verankert ist, aufweisen, wobei
- das erste Tragelement (2) und das mindestens zweite Tragelement (2, 2') in einen Knoten (3) zusammenlaufen und dort mittels der Verbindungsmittel (9, 9', 10) kraftschlüssig zusammengehalten sind, und
- das erste Tragelement (2) und das mindestens zweite Tragelement (2, 2') im Stoßbereich einen Aufnahmeraum (8) bilden, wobei der Aufnahmeraum (8) von den Verbindungsmitteln (9, 9', 10) durchsetzt und von einer erhärtbaren Vergussmasse (15) ausgefüllt ist,
**dadurch gekennzeichnet, dass** die Verbindungsmittel von mindestens einem Stabelement (10) gebildet sind, und das erste Tragelement (2) und das mindestens zweite Tragelement (2') an ihren dem Stoßbereich zugewandten Seiten mindestens einen axial zu ihrer Längsachse gerichteten Hohlraum (13) aufweisen, in dem jeweils ein Endabschnitt des mindestens einen Stabelements (10) verankert ist,
oder dass die Verbindungsmittel von mindestens einem Flächenelement (9, 9') gebildet sind, und das erste Tragelement (2) und das mindestens zweite Tragelement (2, 2') an ihren Enden einen zu ihrer Mittelebene planparallel verlaufenden Schlitz (7) aufweisen, in dem jeweils ein Endabschnitt des mindestens einen Flächenelements (9, 9') verankert ist.

2. Tragkonstruktion nach Anspruch 1, **dadurch gekennzeichnet, dass** das mindestens eine Flächenelement (9, 9') in seinem mittleren Abschnitt eine Randausnehmung (19) aufweist.

3. Tragkonstruktion nach einem der Ansprüche 1 oder 2, **dadurch gekennzeichnet, dass** das die Endabschnitte der Verbindungsmittel (9, 9', 10) eine strukturierte Oberfläche aufweisen, vorzugsweise Löcher, Vertiefungen oder Erhöhungen.

4. Tragkonstruktion nach einem der Ansprüche 1 bis 3, **dadurch gekennzeichnet, dass** die Verbindungsmittel (9, 9', 10) mehrteilig ausgebildet sind, mit einem ersten im ersten Tragelement (2) verankerten Teil (11) und mit einem zweiten im mindestens zweiten Tragelement (2, 2') verankerten Teil (12), wobei das erste Teil (11) und zweite Teil (12) unter Bildung eines Gelenks miteinander verbunden sind und das Gelenk im Aufnahmeraum (8) angeordnet ist.

5. Tragkonstruktion nach einem der Ansprüche 1 bis 4, **dadurch gekennzeichnet, dass** in einem Knoten drei oder mehr Tragelemente (2) zusammenlaufen und benachbarte Tragelemente (2) durch jeweils ein Verbindungsmittel (9, 9', 10) miteinander verbunden sind, wobei jedes Verbindungsmittel (9, 9', 10) einen ersten Endabschnitt und einen zweiten Endabschnitt aufweist, die im Winkel zueinander angeordnet sind, und die ersten Endabschnitte zweier benachbarter Verbindungsmittel (9, 9', 10) nebeneinander im Schlitz (7) eines ersten Tragelements (2) verankert sind und die zweiten Endabschnitte der beiden Verbindungsmittel (9, 9', 10) jeweils nebeneinander mit einem Endabschnitt eines benachbarten Verbindungsmittel (9, 9', 10) in dem Schlitz (7) eines benachbarten Tragelements (2, 2') verankert sind.

6. Tragkonstruktion nach einem der Ansprüche 1 bis 5, **dadurch gekennzeichnet, dass** das erste Tragelement (2) und das zweite Tragelement (2) fluchtend und im Abstand zueinander angeordnet sind und ein drittes Tragelement (17) zwischen dem ersten Tragelement (2) und zweiten Tragelement (2) verläuft, wobei zur Bildung des Aufnahmeraums (8) das dritte Tragelement (17) im Kreuzungspunkt mit dem ersten und zweiten Tragelement (2) eine Randausnehmung (18) aufweist.

7. Tragkonstruktion nach einem der Ansprüche 1 bis 6, **dadurch gekennzeichnet, dass** zur Bildung des Aufnahmeraums (8) die Stirnseiten (4) zweier sich gegenüberliegender Tragelemente (2) im lichten Abstand angeordnet sind, wobei insbesondere die Stirnseiten (4) zweier sich gegenüberliegender Tragelemente (2) konkav ausgebildet sind.

8. Tragkonstruktion nach einem der Ansprüche 1 bis 7, **gekennzeichnet, durch** ein erstes Paar fluchtender und durch ein erstes Flächenelement (9, 9') verbundener Tragelemente (2) und ein zweites Paar fluchtender und durch ein zweites Flächenelement (9, 9') verbundener Tragelemente (2), die sich im Knotenpunkt (3) kreuzen, wobei das erste Flächenelement (9, 9') und das zweite Flächenelement (9, 9') im mittleren Abschnitt jeweils eine Randausnehmung (19) aufweisen, wobei die Öffnungen der Randausnehmungen (19) einander zugewandt sind und das erste Flächenelement (9, 9') und das zweite Flächenelement (9, 9') mit ihren Randausnehmungen (19) ineinander greifen.

9. Tragkonstruktion nach einem der Ansprüche 1 bis 8, **dadurch gekennzeichnet, dass** die erhärtbare Vergussmasse (15) aus Beton besteht, vorzugsweise aus Mineralguss, Polymerbeton oder hochfestem zementgebundenem Beton.

10. Tragkonstruktion nach Anspruch 9, **dadurch gekennzeichnet, dass** die Vergussmasse (15) als Füllstoff oder mineralischen Zuschlag Quarz, Basalt, Granit, Diabas oder Kreide, in Kies- und/oder in Sandform und/oder als Mehl, mit einem Gew.-Anteil von 70 % bis 97 % aufweist, vorzugsweise von 85 % bis 95 %.

11. Tragkonstruktion nach Anspruch 9 oder 10, **dadurch gekennzeichnet, dass** die Vergussmasse (15) als Bindemittel ein PUR-, Epoxid-, Polyester-, Vinylester-, und/oder ein Methacrylharz aufweist, vorzugsweise mit einem Gew.-Anteil von 1 % bis 10%, insbesondere von 5 % bis 8 %.

12. Tragkonstruktion nach einem der Ansprüche 9 bis 11, **dadurch gekennzeichnet, dass** die Vergussmasse (15) als Härter für das Bindemittel Isocyanate, Anhydride, Amine und/oder Polyamine aufweist, vorzugsweise mit einem Gew.-Anteil von 0,5 % bis 10 %, vorzugsweise 1 % bis 5 %.

13. Tragkonstruktion nach einem der Ansprüche 1 bis 12, **dadurch gekennzeichnet, dass** die flächenförmigen Tragelemente (2, 2') von Holzwandelementen (30) und/oder Holzdeckenelementen (32) gebildet sind.

14. Verfahren zur Herstellung einer Tragkonstruktion nach einem der Ansprüche 1 bis 13, **gekennzeichnet durch** folgende Schritte:
Verankerung der Verbindungsmittel in dem ersten und zweiten Tragelement, wobei die Verbindungsmittel (9, 9', 10) einen ersten Endabschnitt, der im ersten Tragelement (2) verankert ist, und einen zweiten Endabschnitt, der in einem zweiten Tragelement (2, 2') verankert ist, aufweisen;
kraftschlüssiges Verbinden der Enden der Tragelemente über die Verbindungsmittel, wobei das erste Tragelement (2) und das mindestens zweite Tragelement (2, 2') im Stoßbereich einen Aufnahmeraum (8) bilden;
Ausfüllen des Aufnahmebereichs mit einer erhärtbaren Vergussmasse (15).

## Claims

1. Wooden support construction having a first struttype or planar support element (2) and at least one second strut-type or planar support element (2, 2') which are butt jointed and held together with the aid of connecting means (9, 9', 10), wherein
- the connecting means (9, 9', 10) have a first end portion which is anchored in the first support element (2), and a second end portion which is anchored in a second support element (2, 2'); wherein
- the first support element (2) and the at least second support element (2, 2') converge in a node (3) and in the latter are held together in a force-fitting manner by means of the connecting means (9, 9', 10); and
- the first support element (2) and the at least second support element (2, 2') in the abutting region form a receptacle space (8), wherein the receptacle space (8) is penetrated by the connecting means (9, 9', 10) and is filled with a curable casting compound (15),
**characterized in that** the connecting means are formed by at least one strut element (10), and the first support element (2) and the at least second support element (2') and the sides thereof that face the abutting region have at least one cavity (13) which is oriented so as to be axial to the longitudinal axis of said support elements (2, 2') and in which is anchored in each case one end portion of the at least one strut element (10);
or **in that** the connecting means are formed by at least one planar element (9, 9'), and the first support element (2) and the at least second support element (2, 2') on the ends thereof have a slot (7) which runs so as to be plane-parallel to the central plane of said support elements (2, 2') and in which is anchored in each case one end portion of the at least one planar element (9, 9').

2. Support construction according to Claim 1, **characterized in that** the at least one planar element (9, 9') in the central portion thereof has a peripheral recess (19).

3. Support construction according to one of Claims 1 or 2, **characterized in that** the end portions of the connecting means (9, 9', 10) have a structured surface, preferably holes, depressions or elevations.

4. Support construction according to one of Claims 1 to 3, **characterized in that** the connecting means (9, 9', 10) are configured in multiple parts, having a first part (11) anchored in the first support element (2), and having a second part (12) anchored in the at least second support element (2, 2'), wherein the first part (11) and the second part (12), while forming an articulation, are connected to one another, and the articulation is disposed in the receptacle space (8).

5. Support construction according to one of Claims 1 to 4, **characterized in that** three or more support elements (2) converge in one node, and neighbouring support elements (2) are in each case connected to one another by one connecting means (9, 9', 10), wherein each connecting means (9, 9', 10) has a first end portion and a second end portion which are mutually disposed at an angle, and the first end portions of two neighbouring connecting means (9, 9', 10) are anchored next to one another in the slot (7) of a first support element (2), and the second end portions of the two connecting means (9, 9', 10) are in each case anchored next to one another with an end portion of a neighbouring connecting means (9, 9', 10) in the slot (7) of a neighbouring support element (2, 2').

6. Support construction according to one of Claims 1 to 5, **characterized in that** the first support element (2) and the second support element (2) are disposed so as to be mutually aligned and at a mutual spacing, and a third support element (17) runs between the first support element (2) and the second support element (2), wherein the third support element (17) for forming the receptacle space (8) in the intersection point with the first and the second support element (2) has a peripheral recess (18).

7. Support construction according to one of Claims 1 to 6, **characterized in that** for forming the receptacle space (8) the end sides (4) of two mutually opposite support elements (2) are disposed at a clearance, wherein in particular the end sides (4) of two mutually opposite support elements (2) are configured so as to be concave.

8. Support construction according to one of Claims 1 to 7, **characterized by** a first pair of mutually aligned support elements (2) that are connected by a first planar element (9, 9'), and a second pair of mutually aligned support elements (2) that are connected by a second planar element (9, 9'), said pairs of support elements (2) intersecting in the node (3), wherein the first planar element (9, 9') and the second planar element (9, 9') in the central portion have in each case one peripheral recess (19), wherein the openings of the peripheral recesses (19) face one another, and the first planar element (9, 9') and the second planar element (9, 9') by way of the peripheral recesses (19) thereof engage in one another.

9. Support construction according to one of Claims 1 to 8, **characterized in that** the curable casting compound (15) is composed of concrete, preferably of mineral cast, polymer concrete, or high-strength cement-bound concrete.

10. Support construction according to Claim 9, **characterized in that** the casting compound (15) as a filler material or mineral supplement comprises quartz, basalt, granite, diabase or chalk in the form of gravel and/or sand and/or as powder, having a percentage by weight from 70% to 97%, preferably from 85% to 95%.

11. Support construction according to Claim 9 or 10, **characterized in that** the casting compound (15) as a binding agent comprises a PUR resin, epoxy resin, polyester resin, vinyl ester resin, and/or a methacrylic resin, preferably having a percentage by weight from 1% to 10%, in particular from 5% to 8%.

12. Support construction according to one of Claims 9 to 11, **characterized in that** the casting compound (15) as a catalyst for the binding agent comprises isocyanates, anhydrides, amines and/or polyamines, preferably having a percentage by weight from 0.5% to 10%, preferably 1% to 5%.

13. Support construction according to one of Claims 1 to 12, **characterized in that** the planar support elements (2, 2') are formed by wooden wall elements (30) and/or wooden ceiling elements (32).

14. Method for producing a support construction according to one of Claims 1 to 13, **characterized by** the following steps:
anchoring the connecting means in the first and the second support element, wherein the connecting means (9, 9', 10) have a first end portion which is anchored in the first support element (2), and a second end portion which is anchored in a second support element (2, 2');
connecting in a force-fitting manner the ends of the support elements by way of the connecting means, wherein the first support element (2) and the at least second support element (2, 2') in the abutting region form a receptacle space (8);
filling the receptacle region with a curable casting compound (15).

## Revendications

1. Structure porteuse en bois comprenant un premier élément porteur (2) en forme de barre ou de configuration aplatie et au moins un deuxième élément porteur (2, 2') en forme de barre ou de configuration aplatie, qui sont disposés bord à bord et dont la cohésion est assurée à l'aide de moyens de liaison (9, 9', 10), sachant que
- lesdits moyens de liaison (9, 9', 10) comportent une première région extrême ancrée dans le premier élément porteur (2) et une seconde région extrême ancrée dans un deuxième élément porteur (2, 2'),
- ledit premier élément porteur (2), et ledit deuxième élément porteur (2, 2') à présence minimale, convergent vers une zone nodale (3) dans laquelle leur cohésion est assurée par engagement positif, à l'aide desdits moyens de liaison (9, 9', 10), et
- ledit premier élément porteur (2), et ledit deuxième élément porteur (2, 2') à présence minimale, forment un espace de réception (8) dans la zone de rencontre, lequel espace de réception (8) est traversé par lesdits moyens de liaison (9, 9', 10) et est comblé par une masse coulée (15) durcissable,
**caractérisée par le fait que** les moyens de liaison sont constitués d'au moins un élément (10) du type tige, le premier élément porteur (2) et le deuxième élément porteur (2, 2') à présence minimale étant munis, sur leurs côtés tournés vers la zone de rencontre, d'au moins une cavité (13) dirigée axialement par rapport à leur axe longitudinal et dans laquelle est ancrée, à chaque fois, une région extrême dudit élément (10) du type tige à présence minimale ;
ou **par le fait que** lesdits moyens de liaison sont constitués d'au moins un élément aplati (9, 9'), ledit premier élément porteur (2) et ledit deuxième élément porteur (2, 2') à présence minimale étant pourvus, à leurs extrémités, d'une fente (7) qui s'étend avec planéité parallèle à leur plan médian et dans laquelle est ancrée, à chaque fois, une région extrême dudit élément aplati (9, 9') à présence minimale.

2. Structure porteuse selon la revendication 1, **caractérisée par le fait que** l'élément aplati (9, 9'), à présence minimale, est doté d'un évidement marginal (19) dans sa région médiane.

3. Structure porteuse selon l'une des revendications 1 ou 2, **caractérisée par le fait que** les régions extrêmes des moyens de liaison (9, 9', 10) présentent une surface structurée, de préférence des trous, des renfoncements ou des protubérances.

4. Structure porteuse selon l'une des revendications 1 à 3, **caractérisée par le fait que** les moyens de liaison (9, 9', 10) sont réalisés en plusieurs parties, incluant une première partie (11) ancrée dans le premier élément porteur (2) et une seconde partie (12) ancrée dans le deuxième élément porteur (2, 2') à présence minimale, ladite première partie (11) et ladite seconde partie (12) étant reliées l'une à l'autre en formant une articulation, et ladite articulation étant logée dans l'espace de réception (8).

5. Structure porteuse selon l'une des revendications 1 à 4, **caractérisée par le fait que** des éléments porteurs (2), au nombre de trois ou plus, convergent dans une zone nodale, et des éléments porteurs (2) voisins sont reliés mutuellement par l'intermédiaire d'un moyen de liaison (9, 9', 10) respectif, sachant que chaque moyen de liaison (9, 9', 10) inclut une première région extrême et une seconde région extrême décrivant un angle entre elles, les premières régions extrêmes de deux moyens de liaison (9, 9', 10) voisins étant ancrées, en juxtaposition, dans la fente (7) d'un premier élément porteur (2) et les secondes régions extrêmes des deux moyens de liaison (9, 9', 10) étant respectivement ancrées en juxtaposition, avec une région extrême d'un moyen de liaison (9, 9', 10) voisin, dans la fente (7) d'un élément porteur (2, 2') voisin.

6. Structure porteuse selon l'une des revendications 1 à 5, **caractérisée par le fait que** le premier élément porteur (2) et le deuxième élément porteur (2) sont agencés avec alignement et à distance l'un de l'autre, un troisième élément porteur (17) étant interposé entre ledit premier élément porteur (2) et ledit deuxième élément porteur (2), sachant que, pour former l'espace de réception (8), ledit troisième élément porteur (17) présente un évidement marginal (18) au point de rencontre avec lesdits premier et deuxième éléments porteurs (2).

7. Structure porteuse selon l'une des revendications 1 à 6, **caractérisée par le fait que**, pour former l'espace de réception (8), les faces extrêmes (4) de deux éléments porteurs (2) placés en vis-à-vis sont disposées avec espacement libre, sachant notamment que les faces extrêmes (4) de deux éléments porteurs (2) placés en vis-à-vis sont de réalisation concave.

8. Structure porteuse selon l'une des revendications 1 à 7, **caractérisée par** une première paire d'éléments porteurs (2) alignés et reliés au moyen d'un premier élément aplati (9, 9'), et par une seconde paire d'éléments porteurs (2) alignés et reliés au moyen d'un second élément aplati (9, 9'), qui s'entrecroisent au point nodal (3), le premier élément aplati (9, 9') et le second élément aplati (9, 9') étant respectivement pourvus d'un évidement marginal (19), dans la région médiane, sachant que les ouvertures des évidements marginaux (19) se font mutuellement face, et que ledit premier élément aplati (9, 9') et ledit second élément aplati (9, 9') s'interpénètrent par leurs évidements marginaux (19).

9. Structure porteuse selon l'une des revendications 1 à 8, **caractérisée par le fait que** la masse coulée (15) durcissable consiste en du béton, de préférence en de la fonte minérale, en du béton polymère ou en du béton à haute résistance, lié au ciment.

10. Structure porteuse selon la revendication 9, **caractérisée par le fait que** la masse coulée (15) renferme, en tant que substance de charge ou en tant qu'adjuvant minéral, du quartz, du basalte, du granite, une diabase ou de la craie sous forme de gravier et/ou de sable et/ou en tant que farine, à raison d'un pourcentage pondéral de 70 % à 97 %, préférentiellement de 85 % à 95 %.

11. Structure porteuse selon la revendication 9 ou 10, **caractérisée par le fait que** la masse coulée (15) renferme, en tant que liant, de la résine de PUR, de la résine époxyde, de la résine de polyester, de la résine d'éther vinylique et/ou une résine méthacrylique, de préférence à raison d'un pourcentage pondéral de 1 % à 10 %, en particulier de 5 % à 8 %.

12. Structure porteuse selon l'une des revendications 9 à 11, **caractérisée par le fait que** la masse coulée (15) renferme, en tant que durcissant destiné au liant, des isocyanates, des anhydrides, des amines et/ou des polyamines, préférentiellement à raison d'un pourcentage pondéral de 0,5 % à 10%, de 1 % à 5 % de préférence.

13. Structure porteuse selon l'une des revendications 1 à 12, **caractérisée par le fait que** les éléments porteurs aplatis (2, 2') sont formés par des éléments de cloisonnement (30) en bois et/ou par des éléments de plafonnage (32) en bois.

14. Procédé de fabrication d'une structure porteuse conforme à l'une des revendications 1 à 13, **caractérisé par** les étapes suivantes :
ancrage des moyens de liaison dans les premier et deuxième éléments porteurs, lesquels moyens de liaison (9, 9', 10) comprennent une première région extrême ancrée dans le premier élément porteur (2) et une seconde région extrême ancrée dans un deuxième élément porteur (2, 2') ;
liaison des extrémités desdits éléments porteurs par engagement positif, par l'intermédiaire desdits moyens de liaison, ledit premier élément porteur (2), et le deuxième élément porteur (2, 2') à présence minimale, formant alors un espace de réception (8) dans la zone rencontre ;
comblement de la zone de réception à l'aide d'une masse coulée (15) durcissable.
